Europäisches Patentamt

European Patent Office

Office européen des brevets

(19)

(11) **EP 1 010 566 B1**

(12) **FASCICULE DE BREVET EUROPEEN**

(45) Date de publication et mention
de la délivrance du brevet:
**16.04.2003 Bulletin 2003/16**

(51) Int Cl.[7]: **B60K 17/356**, B60K 17/10,
B60K 23/08

(21) Numéro de dépôt: **99403145.8**

(22) Date de dépôt: **15.12.1999**

(54) **Dispositif de transmission pour un engin mobile à valve de commande du comportement en virage**

Getriebevorrichtung für fahrbare Maschine mit Ventil zur Kontrolle des Kurvenverhaltens

Transmission device for a mobile machine with turning behaviour control valve

(84) Etats contractants désignés:
**DE FR GB IE IT**

(30) Priorité: **16.12.1998 FR 9815873**

(43) Date de publication de la demande:
**21.06.2000 Bulletin 2000/25**

(73) Titulaire: **POCLAIN HYDRAULICS INDUSTRIE
60411 Verberie (FR)**

(72) Inventeurs:
• **Cousin, Jean-Claude
60700 Pontpoint (FR)**
• **Martin, Louis
60200 Compiègne (FR)**

(74) Mandataire: **Intès, Didier Gérard André et al
Cabinet Beau de Loménie,
158, rue de l'Université
75340 Paris Cedex 07 (FR)**

(56) Documents cités:
**EP-A- 0 547 947          EP-A- 0 816 153
FR-A- 2 719 001**

**Description**

La présente invention concerne un dispositif de transmission hydrostatique d'un engin mobile ayant un groupe d'organes de déplacement avant et un groupe d'organes de déplacement arrière, le ou les organes de déplacement d'un desdits groupes étant directeurs.

Le dispositif comprend un circuit de transmission qui comporte une pompe et des moteurs hydrauliques d'un groupe de moteurs avant et d'un groupe de moteurs arrière, pour les organes de déplacement des groupes avant et arrière. Un premier des groupes de moteurs avant et arrière comprend au moins deux moteurs auxquels sont respectivement attelés deux organes de déplacement situés de chaque côté de l'engin, tandis que le deuxième groupe de moteurs comprend au moins un moteur auquel est attelé au moins un organe de déplacement, les deux moteurs du premier groupe de moteurs étant des moteurs doubles, à deux cylindrées distinctes de fonctionnement qui correspondent respectivement à un premier et à un deuxième moteur élémentaire, le premier moteur élémentaire de chacun de ces moteurs doubles étant relié à la pompe en parallèle avec un moteur du deuxième groupe de moteurs, tandis que le deuxième moteur élémentaire est relié en série avec ledit moteur du deuxième groupe, une première et une deuxième conduite de série existant ainsi entre les deuxièmes moteurs élémentaires de chacun des deux moteurs doubles et le deuxième groupe de moteurs.

Selon le type d'engin, on peut choisir que les organes de déplacement directeurs, par exemple des roues directrices, soient le ou les organes de déplacement arrière ou, au contraire, le ou les organes de déplacement avant.

De même, le "premier" groupe de moteurs, celui qui comprend toujours au moins deux moteurs doubles, peut être le groupe de moteurs avant ou le groupe de moteurs arrière. Selon les cas, l'autre groupe de moteurs peut comprendre un seul moteur double, ou bien deux moteurs simples, entraînant chacun un organe de déplacement, ou encore deux moteurs doubles entraînant chacun un organe de déplacement.

Un dispositif de ce type est connu par les documents EP 0 547 947 et FR 2 719 001, ce dernier représentant l'état de la technique le plus proche.

Ce raccordement en série des deuxièmes moteurs élémentaires permet de synchroniser les roues qui leur sont attelées avec la ou les roues qui sont attelées aux moteurs du deuxième groupe de moteurs. D'un autre côté, le raccordement en parallèle des premiers moteurs élémentaires permet d'obtenir des couples de sortie de ces moteurs qui soient égaux.

En virage, les roues extérieures au virage doivent couvrir une distance plus importante que les roues intérieures et doivent donc être animées d'une vitesse supérieure à celle de ces dernières. En réalité, chacune des roues du véhicule décrit une courbe dont le rayon de courbure est différent des rayons de courbure des courbes décrites par les autres roues. Par exemple, pour un engin à quatre roues motrices et à deux roues directrices, le rayon de courbure de la courbe décrite par la roue directrice gauche est différent de celui de la courbe que décrit la roue non directrice gauche. Il en va de même pour le côté droit du véhicule.

Ainsi, pour le comportement en virage, les documents précités préconisent de supprimer momentanément la synchronisation des roues en actionnant des valves qui permettent un raccordement momentané des conduites de série à la pompe, ce qui permet en fait de rapprocher momentanément le fonctionnement du dispositif de celui d'un circuit dont tous les moteurs seraient disposés en parallèle.

Toutefois, avec les dispositifs des deux documents précités, en virage, les deux conduites de série sont reliées par la même communication à l'un des orifices de la pompe. Il en résulte que la pression est sensiblement la même dans ces deux conduites de série, de sorte que les moteurs qui sont raccordés par ces conduites fournissent sensiblement le même couple. Par conséquent, avec les dispositifs du type précité, lorsque la valve de désaccouplement des moteurs en virage est activée, il n'est pas possible d'obtenir un effort de traction particulier sur telle ou telle des roues du véhicule pour laquelle ce serait nécessaire. D'autre part, il existe un risque de patinage dans cette situation.

Le document EP 0 816 153 divulgue un autre dispositif du même type, dans lequel des valves permettent de court-circuiter momentanément les deuxièmes moteurs élémentaires de chacun des deux moteurs du premier groupe de moteurs. Lorsque ces valves sont activées, seuls des moteurs disposés en parallèle les uns par rapport aux autres restent actifs. Cette mise en parallèle permet aux roues intérieures et extérieures dans un virage d'être animées de vitesses différentes. Toutefois, là encore, il n'est pas possible de faire en sorte que les moteurs actifs pour les roues intérieures et extérieures délivrent des couples différents, de sorte qu'il n'est pas possible de générer des efforts de traction différents pour la roue intérieure et la roue extérieure.

La présente invention vise à remédier aux inconvénients précités pour améliorer le comportement de l'engin en particulier en virage, en permettant que les roues intérieures et extérieures au virage soient animées de vitesses différentes tout en étant capables de fournir des efforts de traction également différents.

Ce but est atteint grâce au fait que le dispositif comprend une valve de sélection reliée à la première conduite de série par une première connexion, à la deuxième conduite de série par une deuxième connexion et à un orifice de la pompe par une troisième connexion, au fait que ladite valve est susceptible d'occuper une configuration dite de ligne droite dans laquelle les trois connexions précitées sont isolées les unes des autres, une configuration dite de virage à gauche, dans laquelle les première et troisième connexions sont reliées par une communication dite première branche gauche tandis que les deuxième et troisième connexions sont reliées par une communication dite deuxième branche gauche, et une configuration dite de virage à droite, dans laquelle les première et troisième connexions sont reliées par une communication dite première branche droite tandis que les deuxième et troisième connexions sont reliées par une communication dite deuxième branche droite et au fait que les sections de passage de certaines, au moins, desdites branches droites et gauches sont différentes.

Ainsi, les positions de virage à gauche et de virage à droite de la valve de sélection sont respectivement spécifiquement adaptées à un virage à gauche et à un virage à droite de l'engin. Les sections de passage dans certaines au moins des branches droites et gauches de la valve étant différentes, des pertes de charge sont provoquées dans certaines des branches par rapport aux autres, selon la position de la valve. Ces pertes de charge signifient qu'une diminution de pression s'opère du côté aval de la branche considéré dans le sens de circulation du fluide, par rapport au côté amont.

En particulier, on choisira que les sections de passage dans les premières et deuxièmes branches droites soient différentes l'une de l'autre et que les sections de passage dans les premières et deuxième branches gauches soient différentes l'une de l'autre. De ce fait, lorsque la valve de sélection occupe sa position de virage à gauche ou sa position de virage à droite, les pressions dans les deux conduites de série peuvent être différentes, ce qui permet d'assurer un report de couple et donc un effort de traction différent entre les différentes roues de l'engin, en particulier entre une ou plusieurs des roues intérieures et une ou plusieurs des roues extérieures au virage.

Pour un engin de configuration donnée, on peut définir une épure de direction, c'est-à-dire déterminer les courbes que décrivent chacune des roues de l'engin dans un virage de courbure donnée, courbes qui donnent les différences de distance qu'ont à parcourir chacune de ces roues. Avantageusement, l'épure de direction est prise en compte pour déterminer les sections de passage des branches droites et gauches de la valve de sélection.

Avantageusement, la deuxième branche droite et la première branche gauche ont sensiblement la même section de passage maximale qui est supérieure aux sections de passage maximales de la première branche droite et de la deuxième branche gauche.

Ceci constitue une manière simple de régler les différentes sections de passage de la valve de sélection pour un engin dont les comportements dans un virage à droite et à gauche sont sensiblement symétriques.

De préférence, le dispositif comporte des moyens de commande de la configuration de la valve de sélection qui prennent en compte la position angulaire des organes de déplacement directeurs.

La valve de sélection est une valve progressive, c'est-à-dire que, à partir de sa position de ligne droite, elle passe progressivement dans l'une ou l'autre de ses positions de virage, à droite ou à gauche, de manière à ouvrir progressivement les branches droites ou gauches de cette valve.

En effet, plus le rayon de courbure de virage est petit, plus les courbes décrites par les roues extérieures sont différentes de celles que décrivent les roues intérieures, de sorte que la différence de vitesse nécessaire entre les roues extérieures et les roues intérieures est plus grande.

Il est donc avantageux de commander le passage progressif de la valve entre l'une ou l'autre de ses configurations en fonction de la direction des organes de déplacement directeurs. Globalement, pour un virage à très grand rayon de courbure, la valve pourra être légèrement déplacée vers sa configuration de virage à gauche ou à droite pour permettre seulement une légère différence de section de passage entre la première et la deuxième branche droite ou gauche. En revanche, dans un virage à petit rayon de courbure, la valve pourra être beaucoup plus fortement déplacée dans sa configuration de virage à droite ou dans sa configuration de virage à gauche, pour permettre une différence beaucoup plus importante entre les premières et deuxièmes branches droites ou gauches.

Le dispositif selon l'invention s'applique par exemple à un engin à quatre roues motrices ou à trois roues motrices, auquel cas le moteur qui sert à l'entraînement de la roue isolée, qui est de préférence la roue directrice, est un moteur double, chacun des moteurs élémentaires qui le composent étant relié en série aux deuxièmes moteurs élémentaires de chacun des deux moteurs doubles qui entraînent les deux autres roues.

L'invention sera bien comprise et ses avantages apparaîtront mieux à la lecture de la description détaillée qui suit, de modes de réalisation représentés à titre d'exemples non limitatifs.

La description se réfère aux dessins annexés, sur lesquels :

- la figure 1 illustre schématiquement le comportement en virage d'un engin à quatre roues motrices, entraînées par des moteurs hydrauliques ;
- la figure 2 montre les variations des débits de fluide dans les conduites de série du circuit de transmission de l'engin de la figure 1 en fonction de l'inclinaison de la roue directrice qui est extérieure au virage ;
- la figure 3 représente un circuit illustrant le dispositif de l'invention, pour un engin à quatre roues motrices du type représenté sur la figure 1 ;
- la figure 4 est une vue analogue à la figure 1, pour un engin à trois roues ;
- la figure 5 est une vue analogue à la figure 2, pour le circuit de transmission de l'engin de la figure 4 ;
- la figure 6 représente un circuit illustrant le dispositif de l'invention appliqué à un engin à trois roues motrices ;

- les figures 7A, 7B et 7C montrent une valve de sélection en coupe longitudinale, dans chacune de ses trois configurations ;
- la figure 8 est une vue analogue à la figure 7A, montrant une variante de valve de sélection ;
- la figure 9 montre une variante du circuit de la figure 3 ; et
- les figures 10 et 11 montrent les variations des sections de passage dans les branches droites et gauches de la valve en fonction de l'inclinaison de la roue directrice extérieure de l'engin de la figure 1 ou de la roue directrice unique de l'engin de la figure 4.

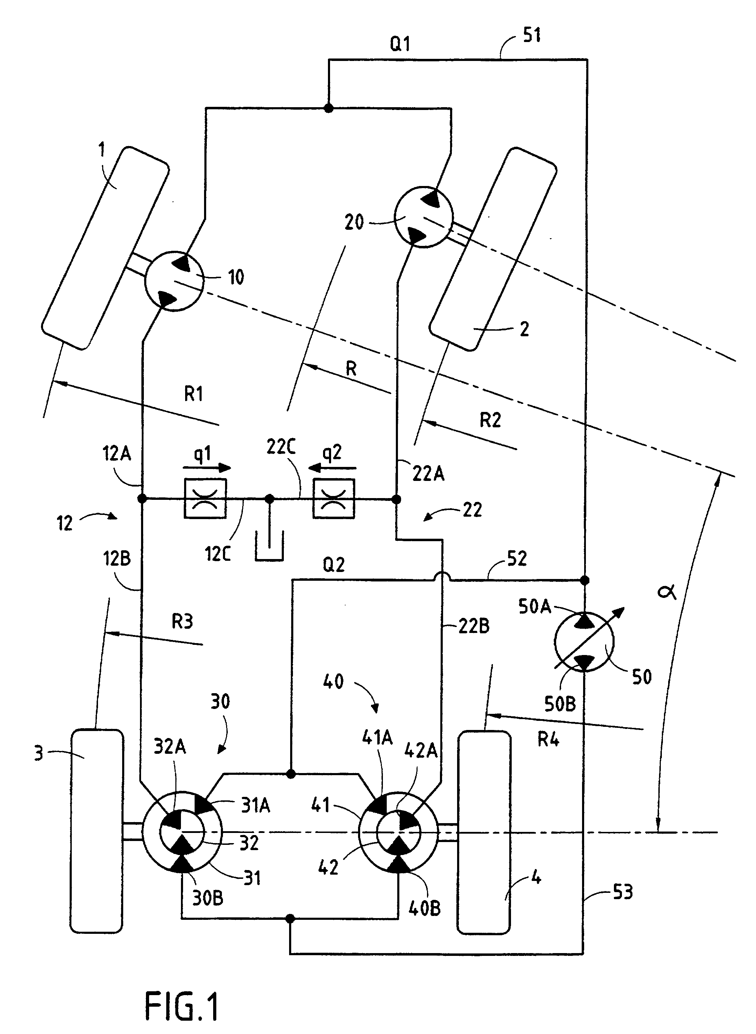

La figure 1 montre la position des quatre roues motrices, 1, 2, 3 et 4 d'un engin dans un virage dont le rayon de courbure est R. Dans l'exemple représenté, les deux roues avant, 1 et 2, sont directrices. Pour aborder le virage, le conducteur actionne la direction de l'engin de manière à faire tourner les roues 1 et 2. Celles-ci sont donc inclinées de manière à être placées sur des courbes dont les rayons de courbures sont respectivement $R_1$ et $R_2$.

Les roues arrières 3 et 4 sont non directrices. Dans le virage, elles se trouvent sur des courbes dont les rayons de courbures sont respectivement $R_3$ et $R_4$. On peut ainsi tracer l'épure de direction de l'engin, c'est-à-dire les courbes définies par l'évolution des rayons de courbure $R_1$ à $R_4$ en fonction du rayon R ou, plutôt, en fonction de l'angle a qui représente l'inclinaison de la roue directrice qui est extérieure au virage. Chacune des roues de l'engin a alors une distance plus ou moins grande à couvrir selon que le rayon de courbure de la courbe sur laquelle elle se trouve est plus ou moins grand.

Chacune des roues 1 à 4 est motrice et est attelée à un moteur hydraulique, respectivement 10, 20, 30 et 40. Le circuit de transmission est un circuit fermé et comprend une pompe 50 à deux orifices, respectivement 50A et 50B, et à débit variable. Les moteurs 30 et 40 sont des moteurs doubles, à deux cylindrées de fonctionnement, qui correspondent respectivement à un premier moteur élémentaire, 31 pour le moteur 30 et 41 pour le moteur 40 et à un deuxième moteur élémentaire, respectivement 32 et 42.

Les moteurs 30 et 40 sont des moteurs dits à trois orifices. En effet, les premiers moteurs élémentaires 31 et 41 comportent un premier orifice principal, respectivement 31A et 41A, qui sert par exemple à l'alimentation en fluide, tandis que les deuxièmes moteurs élémentaires comportent un deuxième orifice, respectivement 32A et 42A, qui sert également par exemple à l'alimentation en fluide. Le troisième orifice, respectivement 30B et 40B est commun à, respectivement, les moteurs élémentaires 31 et 32 et les moteurs élémentaires 41 et 42. Ce troisième orifice sert par exemple à l'échappement de fluide.

Dans l'exemple représenté, les moteurs 10 et 20 présentent chacun deux orifices, respectivement 10A et 20A, par exemple pour l'alimentation en fluide et 10B et 20B, par exemple pour l'échappement de fluide.

Les moteurs peuvent avoir un sens préférentiel de fonctionnement pour assurer la marche avant du véhicule, mais ils sont en général réversibles, pour la marche arrière.

Les premiers moteurs élémentaires 31 et 41 des moteurs 30 et 40 sont reliés à la pompe 50 en parallèle avec les moteurs 10 et 20. En effet, le premier orifice 50A de la pompe est raccordé aux orifices 10A et 20A des moteurs 10 et 20 par une conduite 51 et ses branches terminales 51', tandis que les premiers orifices 31A et 41A des moteurs élémentaires 31 et 41 sont reliés au même orifice 50A de la pompe par une conduite 52 et ses branches terminales 52'.

En revanche, les deuxièmes moteurs élémentaires 32 et 42 sont reliés en série avec, respectivement, les moteurs 10 et 20. Ainsi, l'orifice 32A du moteur élémentaire 32 est relié au deuxième orifice 10B du moteur 10 par une première conduite de série 12, tandis que l'orifice 42A du moteur élémentaire 42 est relié au deuxième orifice 20B du moteur 20 par une deuxième conduite de série 22.

Le retour à la pompe 50 se fait par les orifices 30B et 40B des moteurs 30 et 40 qui sont raccordés à l'orifice 50B de la pompe par une conduite 53. Par exemple, le sens préférentiel de fonctionnement de la pompe est tel que les moteurs 10 et 20 sont alimentés avant les moteurs 30 et 40. Les conduites 51 et 52 sont alors des conduites de refoulement de la pompe et d'alimentation des moteurs, tandis que la conduite 53 est la conduite de retour à la pompe. Dans ce cas, les conduites de série 12 et 22 sont des conduites d'échappement pour les moteurs 10 et 20 et des conduites d'alimentation pour les moteurs élémentaires 32 et 42.

Le circuit comporte encore une pompe de gavage 60 qui, par une conduite de gavage 61 sur laquelle sont placés des clapets anti-retour 62, permet d'éviter la cavitation dans les composants hydrauliques en maintenant une pression minimale dite pression de gavage dans les différentes conduites précitées.

Selon l'invention, le dispositif de transmission comporte une valve de sélection 70 qui comporte trois connexions. Par sa première connexion 70A, elle est reliée à la première conduite de série 12 ; par sa deuxième connexion 70B, elle est reliée à la deuxième conduite de série 22 ; et par sa troisième connexion 70C, elle est reliée à la conduite 53 et, par conséquent, à l'orifice 50B de la pompe. La troisième connexion 70C est reliée à celui des deux orifices de la pompe qui n'est pas raccordé aux moteurs 10 et 20 du deuxième groupe de moteurs.

Plus précisément, la conduite 12 se compose d'un premier tronçon 12A relié à l'orifice 10B du moteur 10 et d'un deuxième tronçon 12B relié à l'orifice 32A.

Ces deux tronçons se rejoignent en un noeud N12 et sont donc en dérivation sur un tronçon de conduite 12C qui est relié à la connexion 70A de la valve 70. De même, la conduite 22 se compose d'un premier et d'un deuxième tronçon 22A et 22B, respectivement reliés aux orifices 20B et 42A et se rejoignant au noeud N22, auquel ils se trouvent en dérivation sur un tronçon de conduite 22C qui est raccordé à la connexion 70B. Les tronçons 12A, 12B, 12C, 22A, 22B et 22C sont également identifiés sur la figure 1.

Grâce à l'épure de direction indiquée précédemment, on peut calculer quelles sont les vitesses auxquelles doivent être entraînées les différentes roues du véhicule pour être à même de couvrir simultanément les distances différentes qu'elles ont à parcourir. Dans la mesure où la vitesse d'entraînement de chaque roue est conditionnée par le débit de fluide dans le moteur hydraulique auquel elle est attelée, on peut en déduire une relation entre les débits $Q_1$ dans la conduite 51 et $Q_2$ dans la conduite 52 en fonction des rayons $R_1$ à $R_4$.

Il en résulte une relation entre le débit $q_1$ dans le tronçon de conduite 12C, qui dépend du débit $Q_1$ et des rayons $R_1$, $R_2$ et $R_3$, de même qu'une relation existe entre le débit $q_2$ dans le tronçon de conduite 22C et le débit $Q_1$, en fonction des rayons $R_1$, $R_2$ et $R_4$.

Ces relations sont les suivantes :

$$q_1 = (R_1 - R_3).Q_1/(R_1+R_2)$$

$$q_2 = (R_2 - R_4).Q_1/(R_1+R_2)$$

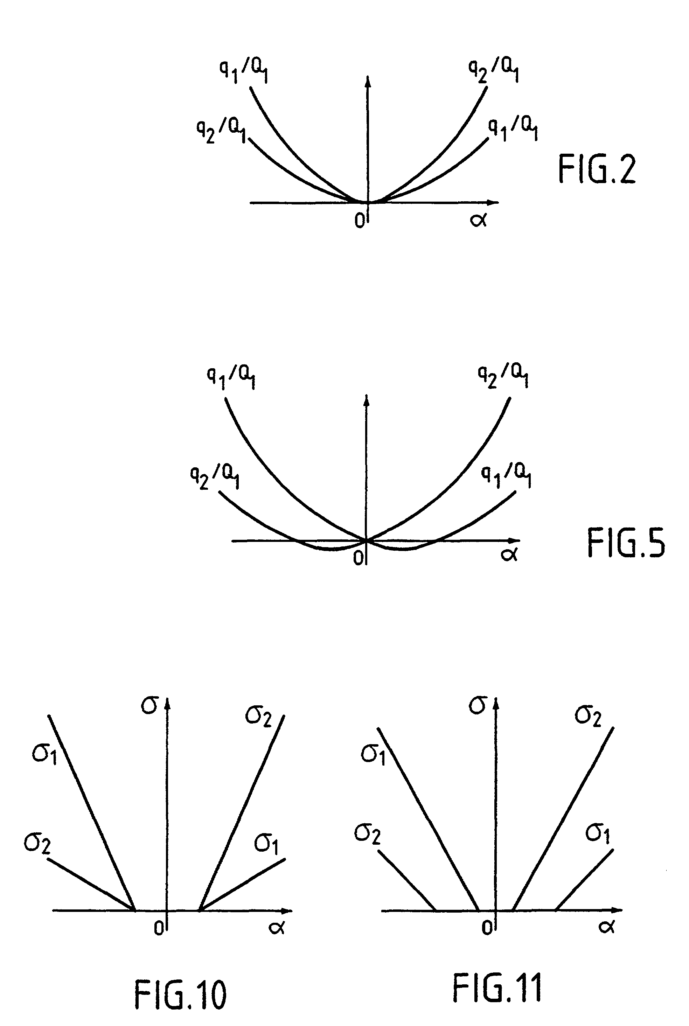

La figure 2 montre les variations de $q_1$ et $q_2$ en fonction de l'angle a qui représente l'inclinaison de la roue directrice qui est extérieure au virage. On constate que $q_1/Q_1$ est inférieur à $q_2/Q_1$ lorsque l'angle a est positif (virage à droite) alors que $q_1/Q_1$ est supérieur à $q_2/Q_1$ lorsque l'angle a est négatif (virage à gauche). Grâce à la valve de sélection de l'invention, en calibrant les sections de passage des branches droites et gauches de ladite valve, on fait en sorte que les pressions dans les conduites de série soient sensiblement les mêmes. Par exemple, dans un virage à droite, la branche droite de la valve raccordée à la conduite de série 12 a une section de passage pour le débit $q_1$ qui est plus faible que la section de passage de la branche droite de la valve raccordée à la conduite de série 22 pour le débit $q_2$.

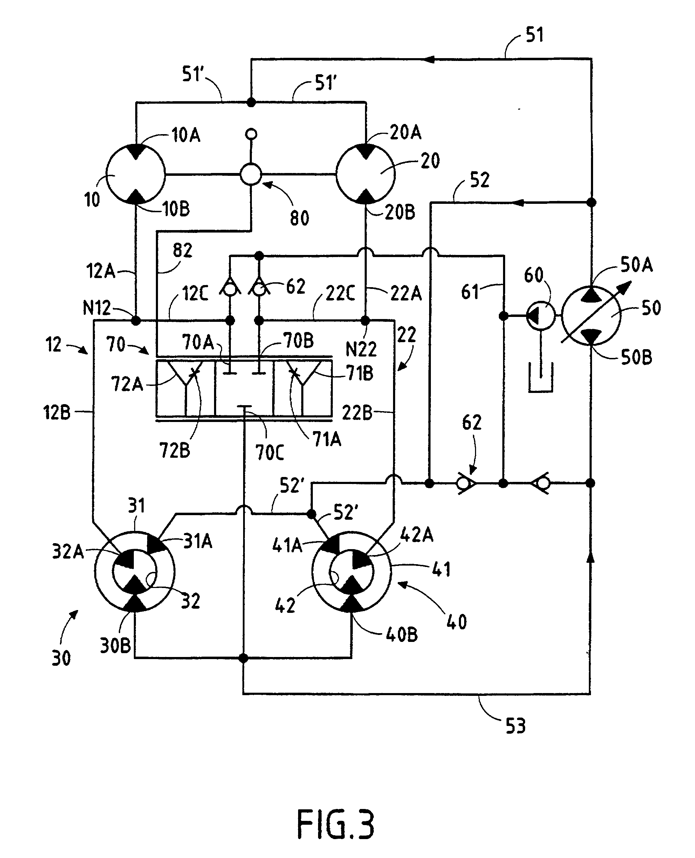

La valve de sélection 70 peut adopter trois configurations. Dans la première configuration, représentée sur la figure 3, les connexions 70A, 70B et 70C sont isolées les unes des autres. Il s'agit d'une configuration dans laquelle le véhicule se déplace en ligne droite, toutes les roues étant animées de la même vitesse. La deuxième configuration de la valve est celle d'un virage à gauche dans laquelle la première connexion 70A est reliée à la connexion 70C par une première branche gauche 71A, tandis que les connexions 70B et 70C sont reliées par une deuxième branche gauche 71B. La troisième configuration de la valve est celle d'un virage à droite, dans laquelle les connexions 70A et 70C sont reliées par une première branche droite 72A, tandis que les connexions 70B et 70C sont reliées par une deuxième branche droite 72B.

Sur la figure 3, on a symbolisé par des restrictions disposées sur les branches 71A et 72B le fait que les sections de passage dans certaines au moins des branches droites et gauches sont différentes.

Les débits $q_1$ et $q_2$ sont différents, de sorte que, par exemple dans un virage à gauche, les débits dans les premières et deuxièmes branches gauches 71A et 71B sont différents. Les sections de passage dans ces branches peuvent être calculées pour, en tenant compte de cette différence de débit, faire en sorte que les pressions dans les deux branches soient sensiblement les mêmes.

Sur la figure 3, la branche 71B est celle qui est reliée aux moteurs 20 et 40 des roues extérieures en virage à gauche, tandis que la branche 72A est celle qui est reliée aux moteurs extérieurs 10 et 30 en virage à droite.

Les restrictions indiquées sur les branches 71A et 72B montrent que l'on a choisi de faire en sorte que la section de passage soit plus grande dans la branche reliée aux moteurs qui entraînent les roues extérieures au virage que dans l'autre branche.

En effet, les conduites de série 12 et 22 sont, pour les moteurs 10 et 20 qui entraînent les deux roues avant directrices, des conduites d'échappement lorsque le véhicule fonctionne en marche avant, le fluide circulant dans le sens indiqué sur la figure 3.

Le fait que la section de passage de la branche 71B est plus grande que celle de la branche 71A implique qu'en virage à gauche, la différence de pression entre l'alimentation et l'échappement du moteur 20 qui entraîne la roue directrice extérieure au virage est plus élevée que la différence de pression (échappement limité par la restriction) entre l'alimentation et l'échappement du moteur 10 qui entraîne la roue directrice intérieure au virage.

La situation est inverse dans un virage à droite.

Il en résulte que, en virage, l'effort de traction que peut fournir la roue directrice extérieure est plus important que celui que peut fournir la roue directrice intérieure.

Le sens de marche avant indiqué sur la figure 3 est celui qui est préférentiel pour des engins à quatre roues motrices, dont les deux roues avant sont directrices, par exemple des engins agricoles comme des vendangeuses à quatre roues. Il existe toutefois des engins à quatre roues motrices dont les roues arrière sont directrices. Dans ce cas, le sens préférentiel d'alimentation en marche avant sera plutôt le sens inverse de celui que montre la figure 3. Dans ce cas également, si ce sont les roues avant qui sont entraînées par les moteurs doubles 30 et 40, on pourra choisir au contraire de réduire la section des branches 71B et 72A par rapport à celle des branches 71A et 72B, pour obtenir le même résultat, à savoir un effort de traction plus important dans la roue avant extérieure au virage.

Dans l'exemple représenté, les moteurs 10 et 20 des deux roues directrices sont des moteurs à cylindrée unique. On peut également prévoir des moteurs à deux cylindrées, du même type que les moteurs 30 et 40, ou plus classiques, ayant seulement deux orifices principaux.

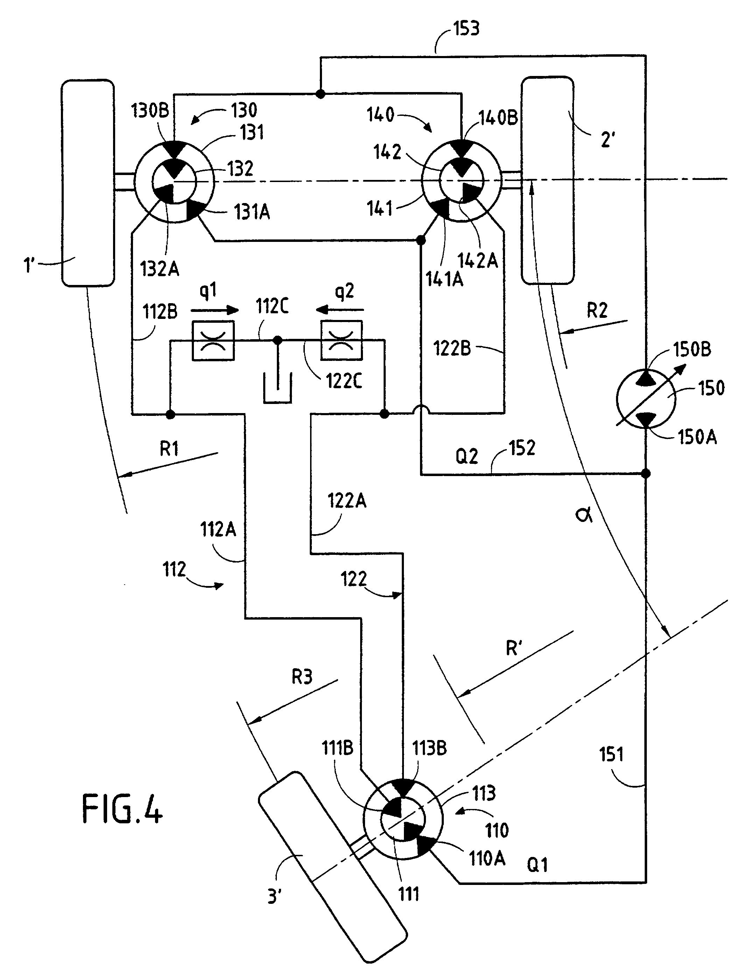

La figure 4 montre la position des trois roues motrices 1', 2' et 3' d'un engin dans un virage dont le rayon de courbure est R'. Dans l'exemple représenté, la roue arrière isolée 3' est directrice. Les trois roues 1', 2' et 3' du véhicule se déplacent sur des courbes dont les rayons de courbure sont respectivement $R_1$, $R_2$ et $R_3$.

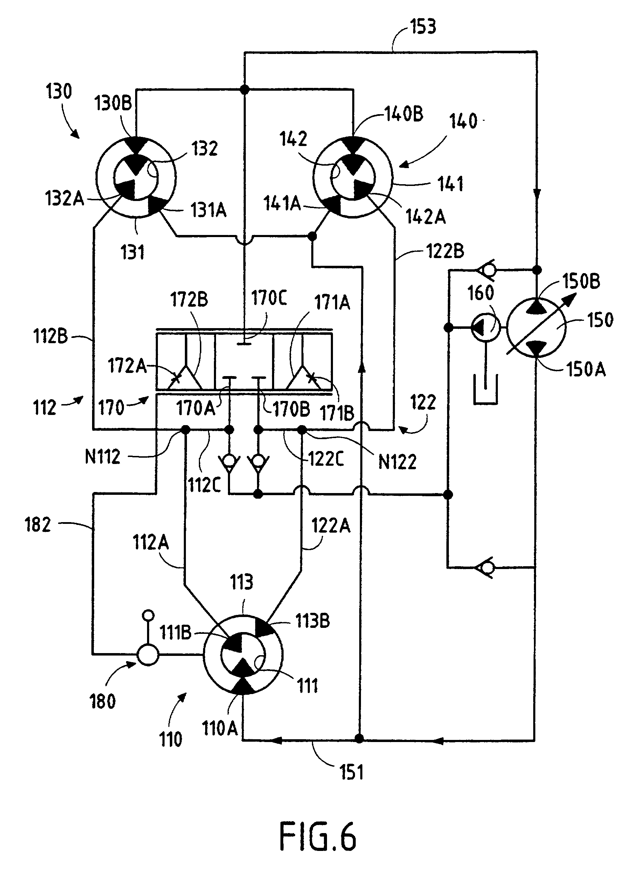

La figure 6 montre plus précisément le dispositif de l'invention appliqué au circuit de transmission de l'engin à trois roues de la figure 4.

Ce circuit comprend une pompe 150 qui, par une conduite 151 reliée à son orifice 150A, alimente un moteur 110 qui entraîne la roue isolée, qui est la roue arrière et directrice. De manière générale, le sens de circulation préférentiel du fluide est celui dans lequel le moteur qui entraîne la roue directrice isolée est alimenté en premier.

Le moteur 110 est un moteur double, qui comprend deux cylindrées distinctes de fonctionnement qui correspondent respectivement à un premier moteur élémentaire 111 et à un deuxième moteur élémentaire 113. Il s'agit d'un moteur à trois orifices, analogue aux moteurs 30 et 40 de la figure 3. Ainsi, l'orifice 110A qui, en marche avant, est un orifice d'alimentation, est commun aux moteurs élémentaires 111 et 113, tandis que l'échappement de fluide en dehors de ces deux moteurs élémentaires se fait par des orifices 111B et 113B qui leur sont spécifiques.

Les deux roues avant non directrices du véhicule de la figure 6 sont entraînées par deux moteurs doubles, 130 et 140, analogues aux moteurs 30 et 40 de la figure 3. On reconnaît ainsi les moteurs élémentaires 131 et 132, avec leurs orifices d'alimentation en marche avant 131A et 132A et leur orifice commun d'échappement 130B, de même que l'on reconnaît les moteurs élémentaires 141 et 142, avec leurs orifices d'alimentation en marche avant 141A et 142A et leur orifice commun d'échappement 140B.

Les premiers moteurs élémentaires 131 et 141 sont raccordés à l'orifice 150A de la pompe par la conduite 152, en dérivation sur la conduite 151. Les deuxièmes moteurs élémentaires 132 et 142 sont raccordés à, respectivement, l'orifice 111B du premier moteur élémentaire 111 du moteur 110 et l'orifice 113B du deuxième moteur élémentaire 113 de ce moteur double, par deux conduites de série, respectivement 112 et 122. Une pression de gavage est maintenue dans différentes conduites à l'aide d'une pompe de gavage 160.

Le circuit de la figure 6 comporte une valve de sélection 170, dont les différentes connexions et branches sont affectées des mêmes références que celles de la valve 70, augmentées de 100. La connexion 170C est raccordée au deuxième orifice 150B de la pompe 150 par la conduite de retour 153, à laquelle sont également raccordés les orifices 130B et 140B des moteurs 130 et 140. On a également schématisé des restrictions disposées sur la deuxième branche gauche 171B et sur la première branche droite 172A.

La conduite 112 se compose d'un premier et d'un deuxième tronçon 112A et 112B, respectivement reliés à l'orifice 111B du moteur 110 et à l'orifice 132A. Ces deux tronçons se rejoignent en un noeud N112 et sont donc en dérivation sur un tronçon de conduite 112C qui est relié à la connexion 170A de la valve 170. De même, la conduite 122 se compose d'un premier et d'un deuxième tronçon 122A et 122B, respectivement reliés aux orifices 113B et 142A et se rejoignant au noeud N122, auquel ils se trouvent en dérivation sur un tronçon de conduite 122C qui est raccordé à la connexion 170B. Les tronçons 112A, 112B, 112C, 122A, 122B et 122C sont également identifiés sur la figure 4.

Cette fois, les débits $q_1$ dans le tronçon 112C et $q_2$ dans le tronçon 122C en fonction du débit $Q_1$ dans la conduite 151 d'alimentation du moteur de la roue directrice et des rayons $R_1$, $R_2$ et R3 sont donnés par les relations suivantes :

$$q_1 = (R_3 - R_1).Q_1/(2R_3)$$

$$q_2 = (R_3 - R2).Q_1/(2R_3)$$

La figure 5 montre les variations de $q_1$ et $q_2$ en fonction de l'angle a qui représente l'inclinaison en virage de la roue directrice isolée. On constate également que $q_1/Q_1$ est inférieur à $q_2/Q_1$ lorsque l'angle a est positif (virage à droite) alors que $q_1/Q_1$ est supérieur à $q_2/Q_1$ lorsque l'angle a est négatif (virage à gauche). La valve de sélection selon l'invention permet de faire en sorte que les pressions dans les conduites de série soient sensiblement les mêmes.

Ainsi, dans un virage à droite, c'est la première branche droite 172A qui est raccordée à la conduite de série 112, elle-même raccordée au moteur 130 qui entraîne la roue extérieure au virage, qui présente une section de passage plus faible que celle de la deuxième branche droite, reliée à la conduite de série 122 qui est raccordée au moteur 140 de la roue intérieure au virage.

De même, la section de passage dans la branche 171B (branche "extérieure" en virage à gauche) est inférieure à la section de passage dans la branche 171A. En marche avant, les conduites 112 et 122 servent à l'alimentation des moteurs élémentaires 132 et 142. Ainsi, lors d'un virage à droite, la pression est plus importante dans la conduite 112 que dans la conduite 122, ce qui signifie que la différence de pression entre les bornes d'alimentation 132A et d'échappement 130B du moteur élémentaire 132 est plus grande que la différence de pression aux bornes du moteur élémentaire 142. La situation est inverse lors d'un virage à gauche. Par conséquent, l'effort de traction que peut fournir la roue avant extérieure à un virage est supérieur à celui que peut fournir la roue avant intérieure.

Dans ce cas également, on cherche à obtenir que ce soit la roue avant extérieure au virage qui fournisse l'effort de traction le plus important. Dans un engin à trois roues, c'est la roue isolée qui est directrice. Dans des engins tels que des chariots élévateurs, cette roue isolée et directrice est la roue arrière.

En revanche, dans un engin à trois roues tel qu'un tracteur agricole, on choisira en général que la roue isolée et directrice soit la roue avant. Dans ce cas, cette roue serait également alimentée par la pompe avant les roues non directrices. On choisira alors avantageusement de placer les restrictions comme sur la figure 3.

Sur la figure 3, on a schématisé un système 80 de détection de la position angulaire des roues directrices. Par une ligne de commande 82, ce système commande le déplacement progressif de la valve 70 entre l'une ou l'autre de ses configurations. De même, le système 180 de détection de la position angulaire de la roue directrice entraînée par le moteur 110 du circuit de la figure 6 est relié par une conduite de commande 182 à la valve progressive 170.

Ceci signifie que les moyens de commande de la configuration de la valve de sélection 70 ou 170 prennent en compte la position angulaire des organes de déplacement directeur. Ainsi, la valve de sélection comprend un tiroir susceptible d'occuper trois positions stables définissant respectivement les première, deuxième et troisième configurations de cette valve et les lois de variation des sections de passage dans les branches droites et gauches de cette valve au cours du déplacement du tiroir entre ces différentes positions sont déterminées en fonction de l'épure de direction de l'engin.

En d'autres termes, les augmentations et les diminutions des sections de passage prennent en compte les variations des débits dans les conduites de série, variations elles-mêmes conditionnées par les rayons de courbure des différentes courbes sur lesquelles se trouvent les organes de déplacement du véhicule.

La section de passage dans une branche, par exemple 72A, détermine la perte de charge de part et d'autre de cette branche, c'est-à-dire par exemple la différence de pression entre la conduite 53 et la conduite de série qui communique avec cette branche. De même, la section de passage dans l'autre branche, par exemple la branche 72B, détermine la perte de charge entre la conduite 53 et la conduite 22. Il en résulte que les rapports entre les sections de passage dans les deux branches de droite ou dans les deux branches de gauche déterminent la différence de pression entre les deux conduites de série.

Selon une variante avantageuse, on peut choisir que les lois de variation des sections de passage dans les différentes branches de la valve de sélection soient telles que lesdites variations en fonction de la position angulaire des organes de déplacement directeur soient proportionnelles aux variations, également en fonction de la position angulaire des organes de déplacement directeur, des débits de fluide $q_1$ et $q_2$ qui sont nécessaires dans les branches droites et gauches de la valve pour provoquer un déplacement des organes de déplacement sensiblement sans patinage de ces derniers par rapport au sol. En effet, ce rapport de proportionnalité permet de faire en sorte que les pertes de charge soient sensiblement égales dans chacune des deux branches de droite ou dans chacune des deux branches de gauche, de sorte que les pressions de fluide dans les deux conduites de série, 12 et 22 ou 112 et 122, soient sensiblement égales.

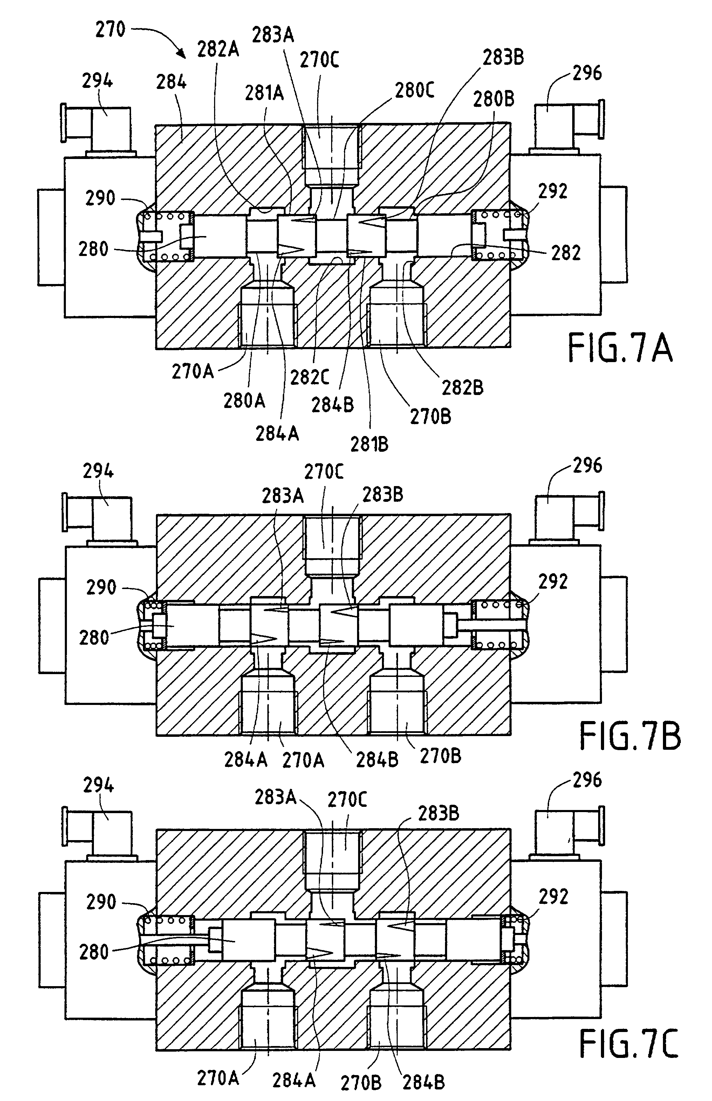

Les figures 7A, 7B et 7C désignent par la référence 270 une valve de sélection conforme à l'invention, pouvant être les valves 70 ou 170 des figures 3 ou 6. Cette valve comprend un tiroir 280 susceptible d'occuper trois positions, respectivement représentées sur les figures 7A, 7B et 7C. Ce tiroir est mobile dans un alésage 282 ménagé dans le corps 284 de la valve. Ce corps présente trois orifices 270A, 270B et 270C, qui correspondent respectivement aux connexions 70A, 70B et 70C ou aux connexions 170A, 170B et 170C des valves 70 ou 170. Ces orifices sont raccordés à des gorges annulaires, respectivement 282A, 282B et 282C, qui sont ménagées dans l'alésage 282, par des perçages transversaux. De même, trois gorges annulaires, respectivement 280A, 280B et 280C, sont ménagées sur la surface cylindrique externe du tiroir. La gorge 280C est située entre les gorges 280A et 280B, de même que la gorge 282C est située entre les gorges 282A et 282B.

La figure 7A montre la configuration de ligne droite de la valve 270 et l'on voit que les gorges 282A, 282B et 282C sont isolées les unes des autres par les portions intermédiaires 281A et 281B du tiroir, situées entre les gorges 280A et 280C d'une part et entre les gorges 280C et 280B d'autre part.

Le tiroir est maintenu dans cette position intermédiaire par l'effort antagoniste de deux ressorts, respectivement 290 et 292, situés à chacune de ses extrémités.

Sur la figure 7B, le tiroir est déplacé vers la gauche, et les gorges 282A et 282B communiquent avec la gorge 282C. Les portions intermédiaires 281A et 281B du tiroir sont munies d'encoches ou de fentes.

Ainsi, dans la configuration de la figure 7B, les encoches 283A de la portion intermédiaire 281A définissent la section de passage des fluides entre les connexions 270C et 270A, tandis que les encoches 283B de la portion intermédiaire 281B définissent la section de passage entre les connexions 270C et 270B. Dans l'exemple représenté, on voit que les encoches 283B sont plus profondes que les encoches 283A, de sorte que, la différence de pression entre la connexion 270C et la connexion 270B est moins importante que la différence de pression entre la connexion 270C et 270A. Par exemple, cette position dans laquelle le tiroir est déplacé vers la gauche correspond à la configuration de virage à gauche de la valve 70 de la figure 3.

Sur la figure 7C, le tiroir est déplacé vers la droite et les connexions 270C et 270A communiquent par les encoches 284A de la portion intermédiaire 281A du tiroir, tandis que la connexion 270C communique avec la connexion 270B par les encoches 284B de la portion intermédiaire 281B de ce tiroir. Les encoches 284A étant plus profondes que les encoches 284B, la différence de pression est cette fois plus élevée entre les connexions 270C et 270B qu'entre les connexions 270C et 270A. Cette position dans laquelle le tiroir est déplacé vers la droite correspond à la configuration de virage à droite de la valve 70 de la figure 3.

Par convention, on a choisi que le tiroir de la valve soit déplacé vers la gauche en virage à gauche et vers la droite en virage à droite. Bien entendu, le sens du déplacement dépend des moyens de commande utilisés et les restrictions dans les différentes branches de cette valve sont disposées en conséquence.

La valve 270 est commandée à l'aide de deux électroaimants, respectivement disposés à chacune de ses extrémités, dont on voit les commandes électriques, respectivement 294 et 296. Ces commandes électriques sont raccordées à des lignes d'alimentation électrique de manière connue en soi. Ces lignes sont alimentées en fonction de la position angulaire des organes de déplacement directeurs de l'engin sur le circuit de la transmission duquel est montée cette valve. En outre, ces lignes électriques peuvent comprendre des interrupteurs de marche/arrêt, qui permettent de commander la mise en service et hors service des électroaimants (non représentés).

De préférence, des variateurs de puissance sont disposés sur les lignes électriques, pour faire varier l'alimentation des électroaimants de manière progressive. Ceci permet, lorsque les électroaimants sont mis en service, de déplacer plus ou moins le tiroir de la valve vers l'une ou l'autre de ses positions en fonction de la valeur de l'inclinaison des organes directeurs.

Une telle valve, commandée par des électroaimants, est particulièrement adaptée pour le circuit de transmission d'un véhicule du type chariot élévateur à trois roues.

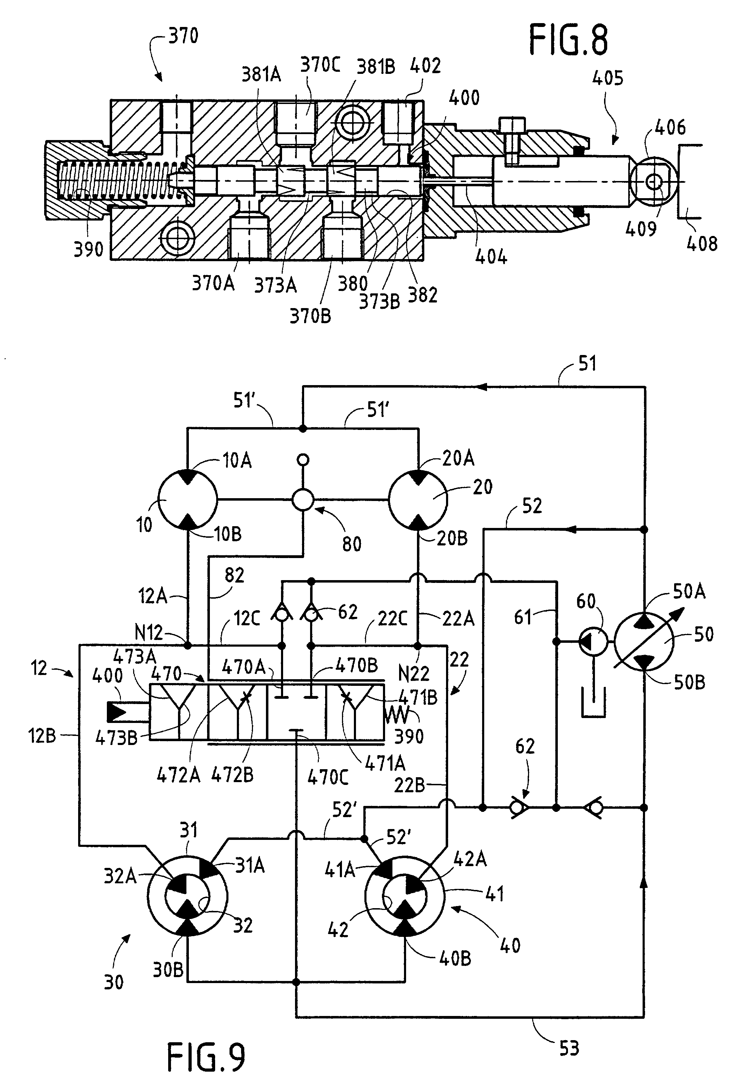

La figure 8 montre une valve de sélection 370 selon une autre variante. Sur cette figure, les éléments analogues à ceux des figures 7A à 7C sont affectés des mêmes références, augmentées de 100. Globalement, la configuration de l'alésage 382 et celle du tiroir 380 sont les mêmes que celles de l'alésage 282 et du tiroir 280 des figures 7A à 7C. Cette fois, une chambre de commande 400 est ménagée à une extrémité du tiroir, cette chambre étant raccordée à une source de fluide par un conduit 402, par exemple un conduit secondaire raccordé à la pompe de gavage pour l'alimentation de la chambre et à un réservoir de fluide pour sa vidange. A l'autre extrémité du tiroir est disposé un ressort 390 dont l'effet est antagoniste de celui de la pression du fluide contenu dans la chambre 400.

Cette valve 370, à la différence de la valve 270, est commandée mécaniquement. Ainsi, à l'une de ses extrémités (en l'espèce, celle où se trouve la chambre 400) est disposée une tige de commande 404, susceptible d'être déplacée en translation par un système de came 405. La figure 8 montre la situation dans laquelle la tige de commande 404 est déplacée au maximum vers la droite, de sorte que le ressort 390 repousse le tiroir 380 dans sa position extrême vers la droite. La came 406 coopère avec une piste de roulement 408. La rotation de la came est commandée par des moyens de commande 409, avantageusement sollicités en fonction de la position angulaire des roues directrices du véhicule.

La came 406 est représentée schématiquement. On comprendra toutefois que son profil comprend trois parties distinctes, respectivement susceptibles de commander la valve de sélection dans sa configuration de ligne droite, dans sa configuration de virage à gauche et dans sa configuration de virage à droite. En effet, selon la partie du profil qui coopère avec la piste 408, la tige 404 est déplacée plus ou moins vers la gauche.

La figure 9 montre un circuit analogue à celui de la figure 3, mais dans lequel une valve 470 remplace la valve 70. En plus des branches 471A, 471B, 472A et 472B analogues à celles de la valve 70, la valve 470 comporte des branches 473A et 473B qui permettent de relier les connexions 470A, 470B et 470C sans restriction, dans une quatrième configuration de la valve dénommée "configuration d'alimentation parallèle".

Par exemple, la valve 470 à quatre positions peut être analogue à la valve 370 de la figure 8 dont le tiroir 380 peut être commandé en position d'alimentation parallèle par alimentation en fluide de la chambre 400 à l'encontre de moyens de rappel tels que le ressort 390.

En effet, quand on alimente la chambre 400 par le conduit 402 relié au gavage, le tiroir 380 est déplacé de manière à comprimer le ressort 390 jusqu'à venir en butée au-delà de la position extrême donnée par la came 406. Les connexions 370A, 370B et 370C communiquent alors librement entre elles par les zones 373A et 373B du tiroir 380 de moindre diamètre, ces zones étant un exemple de réalisation des branches 473A et 473B de la valve 470.

La chambre 400 et le ressort 390 forment des moyens de commande d'alimentation parallèle qui sont activés par l'alimentation de la chambre 400. Lorsque cette chambre est vidangée, ils sont désactivés et le tiroir 380 peut à nouveau être commandé entre ses trois autres positions.

Dans la configuration d'alimentation parallèle, les moteurs 10 et 20 sont raccordés à la pompe 50 selon un raccordement parallèle intégral avec les premiers moteurs élémentaires 31 et 41, les orifices 10B et 20B étant reliés sans restriction à l'orifice 50B en parallèle avec les orifices 30B et 40B. Les branches 473A et 473B n'ayant aucune restriction, les deuxièmes moteurs élémentaires 32 et 42 sont court-circuités et les roues sont désynchronisées.

On peut également prévoir des valves additionnelles pour court-circuiter les premiers demi-moteurs 31 et 41 en limitant ainsi la cylindrée alimentée par la pompe, de manière à augmenter la vitesse de l'engin.

Les figures 10 et 11 montrent l'évolution des sections de passage dans les branches droite et gauche de la valve en fonction de l'angle $\alpha$ évoqué précédemment en référence aux figures 1 et 2 ou aux figures 4 et 5.

L'angle $\alpha$ est positif dans un virage à droite. Ainsi, lorsque cet angle est positif, $\sigma_1$ et $\sigma_2$ représentent respectivement l'évolution de la section de passage de la première branche droite 72A ou 172A de la valve et celle de la deuxième branche droite72B ou 172B de la valve lors du passage progressif de cette valve de sa configuration de ligne droite à sa configuration de virage à droite. Lorsque l'angle $\alpha$ est négatif, l'engin est en virage à gauche, $\sigma_1$ et $\sigma_2$ représentent alors respectivement l'évolution de la section de passage dans la première branche gauche 71A ou 171A et dans la deuxième branche gauche 71B ou 171B lors du passage progressif de la valve de sa position de ligne droite à sa position de virage à gauche.

Pour que l'engin ait le même comportement dans un virage à gauche et dans un virage à droite, on a choisi des fonctions paires pour $\sigma_1$ et $\sigma_2$. De plus, pour simplifier, ces fonctions sont linéaires dans l'exemple représenté.

Dans les réalisations des figures 10 et 11, pour tenir compte des rapports de débits évoqués précédemment en relation avec les figures 2 et 5, on a fait en sorte que $\sigma_1$ reste inférieur à $\sigma_2$ tant que l'angle $\alpha$ est positif alors que $\sigma_1$ est supérieur à $\sigma_2$ quand l'angle $\alpha$ est négatif.

Sur la figure 10, cette situation est obtenue grâce au fait que les fonctions linéaires sont telles que la pente de $\sigma_1$ est inférieure à celle de $\sigma_2$ quand $\alpha$ est positif et inversement quand $\alpha$ est négatif. Sur la figure 11, cette situation est obtenue en choisissant convenablement les valeurs de seuil de l'angle $\alpha$ à partir desquelles $\sigma_1$ et $\sigma_2$ prennent des valeurs non nulles.

Comme indiqué précédemment, cette situation peut permettre d'assurer que les pressions dans les deux conduites de série soient sensiblement les mêmes. On peut toutefois choisir précisément les évolutions de $\sigma_1$ et $\sigma_2$ de manière à assurer des écarts de pression déterminés entre les deux conduites de série pour obtenir qu'une roue donnée du véhicule fournisse l'effort de traction le plus important par exemple, comme indiqué précédemment, la roue avant de l'engin extérieure au virage. Globalement, la valve de sélection de l'invention est définie de manière à assurer en virage des écarts de pressions donnés, écarts nuls si l'on souhaite obtenir des pressions égales dans les conduites de série ou non nuls d'amplitude déterminée si l'on souhaite obtenir, entre telle ou telle des roues du véhicule, un report des efforts de traction dans des proportions données.

## Revendications

1.  Dispositif de transmission hydrostatique d'un engin mobile ayant un groupe d'organes de déplacement avant (1, 2 ; 1', 2') et un groupe d'organes de déplacement arrière (3, 4 ; 3'), le ou les organes de déplacement (1, 2 ; 3') d'un desdits groupes étant directeurs, le dispositif comprenant un circuit de transmission qui comporte une pompe (50 ; 150) et des moteurs hydrauliques d'un groupe de moteurs avant (10, 20 ; 130, 140) et d'un groupe de moteurs arrière (30, 40 ; 110), pour les organes de déplacement des groupes avant et arrière, un premier des groupes de moteurs avant et arrière comprenant au moins deux moteurs (30, 40 ; 130, 140) auxquels sont respectivement attelés deux organes de déplacement (3, 4 ; 1', 2') situés de chaque côté de l'engin, tandis que le deuxième groupe de moteurs comprend au moins un moteur (10, 20 ; 110) auquel est attelé au moins un organe de déplacement (1, 2 ; 3'), les deux moteurs (30, 40 ; 130, 140) du premier groupe de moteurs étant des moteurs doubles, à deux cylindrées distinctes de fonctionnement qui correspondent respectivement à un premier (31, 41; 131, 141) et à un deuxième (32, 42; 132, 142) moteur élémentaire, le premier moteur élémentaire (31, 41; 131, 141) de chacun de ces moteurs doubles (30, 40; 130, 140) étant relié à la pompe (50; 150) en parallèle (51, 52; 151, 152) avec un moteur (10, 20 ; 110) du deuxième groupe de moteurs, tandis que le deuxième moteur élémentaire (32, 42; 132, 142) est relié en série avec ledit moteur (10, 20 ; 120) du deuxième groupe, une première et une deuxième conduite (12, 22 ; 112, 122) de série existant ainsi entre les deuxièmes moteurs élémentaires de chacun des deux moteurs doubles et le deuxième groupe de moteurs,

    **caractérisé en ce qu'**il comprend une valve de sélection (70 ; 170 ; 270; 370; 470) reliée à la première conduite de série (12 ; 112) par une première connexion (70A ; 170A ; 270A ; 370A; 470A), a la deuxième conduite de série (22 ; 122) par une deuxième connexion (70B ; 170B ; 270B ; 370B; 470B) et à un orifice (50B ; 150B) de la pompe (50 ; 150) par une troisième connexion (70C ; 170C ; 270C ; 370C; 470C), **en ce que** ladite valve est susceptible d'occuper une configuration dite de ligne droite dans laquelle les trois connexions précitées sont isolées les unes des autres, une configuration dite de virage à gauche, dans laquelle les première et troisième connexions sont reliées par une communication dite première branche gauche (71A ; 171A; 471A) tandis que les deuxième et troisième connexions sont reliées par une communication dite deuxième branche gauche (71B; 171B); 471B et une configuration dite de virage à droite, dans laquelle les première et troisième connexions sont reliées par une communication dite première branche droite (72A ; 172A; 472A) tandis que les deuxième et troisième connexions sont reliées par une communication dite deuxième branche droite (72B ; 172B;472B) et **en ce que** les sections de passage de certaines, au moins, desdites branches droites et gauches sont différentes.

2. Dispositif selon la revendication 1, **caractérisé en ce que** la deuxième branche droite (72B ; 172B; 472B) et la première branche gauche (71A ; 171A ; 471A) ont sensiblement la même section de passage maximale qui est supérieure aux sections de passage maximales de la première branche droite (72A; 172A; 472A) et de la deuxième branche gauche (71B ; 171B; 471B).

3. Dispositif selon la revendication 1 ou 2, **caractérisé en ce qu'**il comporte des moyens de commande (82 ; 182; 294, 296; 409) de la configuration de la valve de sélection (70 ; 170; 270; 370; 470) qui prennent en compte (80 ; 180) la position angulaire des organes de déplacement directeurs.

4. Dispositif selon l'une quelconque des revendications 1 à 3, **caractérisé en ce que** la valve de sélection (70; 170; 270 ; 370; 470) est une valve progressive.

5. Dispositif selon la revendication 4, **caractérisé en ce que** la valve de sélection (70 ; 170 ; 270; 370; 470) comprend un tiroir (280 ; 380) susceptible d'occuper trois positions stables définissant respectivement les première, deuxième et troisième configurations de ladite valve et **en ce que** les lois de variation des sections de passage dans les branches droites et gauches de la valve de sélection au cours du déplacement de ce tiroir entre ses différentes positions sont déterminées en fonction de l'épure de direction de l'engin.

6. Dispositif selon les revendications 3, 4 et 5, **caractérisé en ce que** lesdites variations des sections de passage en fonction de la position angulaire (80 ; 180) des organes de déplacement directeurs sont proportionnelles aux variations, en fonction de la position angulaire des organes de déplacement directeurs, des débits de fluides ($q_1$, $q_2$) qui sont nécessaires dans les branches droites et gauches (71A, 71B, 72A, 72B ; 171A, 171B, 172A, 172B; 471A, 471B, 472A, 472B) de la valve de sélection (70; 170; 270; 370; 470) pour provoquer un déplacement des organes de déplacement sensiblement sans patinage de ces derniers par rapport au sol.

7. Dispositif selon l'une quelconque des revendications 1 à 6, **caractérisé en ce que** chacun des deux groupes d'organes de déplacement (1, 2, 3, 4) comprend deux organes de déplacement situés de chaque côté de l'engin, le deuxième groupe de moteurs comprenant un premier et un deuxième moteur (10, 20) auxquels sont respectivement attelés deux organes de déplacement (1, 2) qui sont les organes de déplacement directeurs et **en ce que** la première conduite de série (12) relie le deuxième moteur élémentaire (32) de l'un (30) des moteurs du premier groupe de moteurs au premier moteur (10) du deuxième groupe, tandis que la deuxième conduite de série (22) relie le deuxième moteur élémentaire (42) de l'autre moteur (40) du premier groupe de moteurs au deuxième moteur (20) du deuxième groupe.

8. Dispositif selon l'une quelconque des revendications 1 à 7, dans lequel, en marche avant de l'engin, les conduites de série (12, 22) sont des conduites d'alimentation en fluide des deuxièmes moteurs élémentaires (32, 42) des moteurs doubles (30, 40) du premier groupe de moteurs, lesdits moteurs doubles entraînant des organes de déplacement arrière, **caractérisé en ce que** les sections de passage dans les branches droites (72A, 72B; 472A, 472B) et gauches (71A, 71B; 471A, 471B) de la valve de sélection (70 ; 270 ; 370; 470) sont déterminées de telle sorte que, dans un virage à droite ou à gauche, la section de passage dans la branche droite ou gauche (72A, 71B; 472A, 471B) à laquelle est reliée la conduite de série (12, 22) raccordée au deuxième moteur élémentaire (32, 42) de celui des moteurs (30, 40) du premier groupe qui entraîne l'organe de déplacement extérieur au virage est supérieure à la section de passage dans l'autre branche droite ou gauche (72B, 71A; 472B, 471A).

9. Dispositif selon l'une quelconque des revendications 1 à 6, **caractérisé en ce que** le deuxième groupe de moteurs comporte un moteur double (110) à deux cylindrées distinctes de fonctionnement qui correspondent respectivement à un premier et à un deuxième moteur élémentaire (111, 113), un unique organe de déplacement (3'), qui est directeur, étant attelé à ce moteur double et **en ce que** la première conduite de série (112) relie le deuxième moteur élémentaire (132) de l'un (130) des moteurs du premier groupe de moteurs au premier moteur élémentaire (111) du moteur double (110) du deuxième groupe, tandis que la deuxième conduite de série (122) relie le deuxième moteur élémentaire (142) de l'autre moteur (140) du premier groupe de moteurs au deuxième moteur élémentaire (113) dudit moteur double (110) du deuxième groupe.

10. Dispositif selon l'une quelconque des revendications 1 à 7 ou la revendication 9, dans lequel, en marche avant de l'engin, les conduites de série (112, 122) sont des conduites d'alimentation en fluide des deuxièmes moteurs élémentaires (132, 142) des moteurs doubles (130, 140) du premier groupe de moteurs, lesdits moteurs doubles entraînant les organes de déplacement avant (1', 2'), **caractérisé en ce que** les sections de passage dans les branches droites (172A, 172B) et gauches (171A, 171B) de la valve de sélection (170 ; 270; 370) sont déterminées de telle sorte que, dans un virage à droite ou à gauche, la section de passage dans la branche droite (172A, 171B) ou gauche à laquelle est reliée la conduite de série (112, 122) raccordée au deuxième moteur élémentaire de celui des moteurs (130, 140) du premier groupe qui entraîne l'organe de déplacement extérieur au virage est inférieure à la section de passage dans l'autre branche droite ou gauche (1728, 171A).

11. Dispositif selon l'une quelconque des revendications 1 à 10, **caractérisé en ce que** les moyens de commande de la valve de sélection (270) comprennent deux électroaimants (294, 296) susceptibles d'être alimentés en fonction de la direction (80, 180) des organes de déplacement directeurs pour commander respectivement le passage de ladite valve (270) de sa configuration de ligne droite à sa configuration de virage à gauche et à sa configuration de virage à droite et **en ce qu'**il comporte des moyens pour commander la mise en service et hors service de ces électroaimants.

12. Dispositif selon la revendication 11, **caractérisé en ce qu'**il comporte des moyens pour faire varier l'alimentation des électroaimants de manière progressive.

13. Dispositif selon l'une quelconque des revendications 1 à 10, **caractérisé en ce que** les moyens de commande de la valve de sélection (370) comprennent un système de came (405, 406) dont le profil comprend trois parties distinctes, respectivement susceptibles de commander la valve de sélection dans sa configuration de ligne droite, dans sa configuration de virage à gauche et dans sa configuration de virage à droite.

14. Dispositif selon l'une quelconque des revendications 1 à 13, **caractérisé en ce que** la valve de sélection (370 ; 470) est susceptible d'adopter, en outre, une configuration d'alimentation parallèle dans laquelle les première, deuxième et troisième connexions (370A, 370B, 370C ; 470A, 470B, 470C) sont reliées entre elles sans restriction (373A, 373B ; 473A, 473B) et **en ce qu'**il comporte des moyens de commande d'alimentation parallèle susceptibles d'être activés pour commander le passage de la valve de sélection (370 ; 470) dans sa configuration d'alimentation parallèle et d'être désactivés pour autoriser le passage de la valve de sélection dans une autre de ses configurations.

15. Dispositif selon la revendication 14, **caractérisé en ce que** la valve de sélection (370, 470) comprend un tiroir de sélection (380) et **en ce que** les moyens de commande d'alimentation parallèle comprennent une chambre de pilotage hydraulique (400) susceptible d'être alimentée en fluide sous pression pour déplacer le tiroir de sélection (380) vers une position définissant la configuration d'alimentation parallèle, à l'encontre de moyens de rappel (390) de ce tiroir de sélection.

**Patentansprüche**

1. Vorrichtung für einen Hydraulikantrieb einer beweglichen Maschine, welche eine Gruppe aus vorderen Mitteln für die Fortbewegung (1, 2; 1', 2') und eine Gruppe aus hinteren Mitteln für die Fortbewegung (3, 4; 3') aufweist, wobei das oder die Mittel für die Fortbewegung (1, 2, 3') einer der Gruppen lenkend sind, wobei die Vorrichtung einen Übertragungskreis umfasst, der eine Pumpe (50; 150) und hydraulische Motoren einer vorderen Motorengruppe (10, 20; 130, 140) und einer hinteren Motorengruppe (30, 40; 110) für die Mittel für die Fortbewegung aus der vorderen und hinteren Gruppe enthält, wobei eine erste der vorderen und hinteren Motorengruppen zumindest zwei Motoren (30, 40; 130, 140) enthält, an denen jeweils zwei Mittel für die Fortbewegung (3, 4; 1', 2') befestigt sind, welche auf jeder Seite der Maschine angeordnet sind, während die zweite Motorengruppe zumindest einen Motor (10, 20; 110) enthält, an dem zumindest ein Mittel für die Fortbewegung (1, 2; 3') befestigt ist, wobei die zwei Motoren (30, 40; 130, 140) der ersten Motorengruppe Doppelmotoren mit zwei verschiedenen aktiven Hubräumen, die einem ersten (31, 41; 131, 141) und einem zweiten (32, 42; 132, 142) Elementarmotor entsprechen, wobei der erste Elementarmotor (31, 41; 131, 141) jedes der Doppelmotoren (30, 40; 130, 140) parallel (51, 52; 151, 152) zu einem Motor (10, 20; 110) der zweiten Motorengruppe mit der Pumpe (50; 150) verbunden ist, während der zweite Elementarmotor (32, 42; 132, 142) mit dem Motor (10, 20; 120) der zweiten Gruppe in Reihe verbunden ist, wobei somit eine erste und eine zweite Reihenleitung (12, 22; 112, 122) zwischen den zweiten Elementarmotoren jedes der beiden Doppelmotoren und der zweiten Motorengruppe vorhanden sind,

**dadurch gekennzeichnet, dass** sie ein Wahlventil (70; 170; 270; 370; 470) enthält, welches über einen ersten Anschluss (70A; 170A; 270A; 370A; 470A) mit der ersten Reihenleitung (12; 112), über einen zweiten Anschluss (70B; 170B; 270B; 370B; 470B) mit der zweiten Reihenleitung (22; 122) und über einen dritten Anschluss (70C; 170C; 270C; 370C; 470C) mit einer Öffnung (50B; 150B) der Pumpe (50; 150) verbunden ist, dass das Ventil in der Lage ist einzunehmen: eine Konfiguration, die als Konfiguration für Geradeausfahrt bezeichnet wird, bei der die drei vorgenannten Anschlüsse voneinander getrennt sind, eine Konfiguration, die als Konfiguration für eine Linkskurve bezeichnet wird, bei der der erste und der dritte Anschluss über eine als erster Linkszweig (71A; 171A; 471A) bezeichnete Verbindung verbunden sind, während der zweite und der dritte Anschluss über eine als zweiter Linkszweig (71B; 171B; 471B) bezeichnete Verbindung verbunden sind, und eine Konfiguration, die als Konfiguration für eine Rechtskurve bezeichnet wird, bei der der erste und der dritte Anschluss über eine als erster Rechtszweig (72A; 172A; 472A) bezeichnete Verbindung verbunden sind, während der zweite und der dritte Anschluss über eine als zweiter Rechtszweig (72B; 172B; 472B) bezeichnete Verbindung verbunden sind, und dass die Durchlassquerschnitte von zumindest bestimmten der Rechts- und Linkszweige unterschiedlich sind.

2. Vorrichtung nach Anspruch 1, **dadurch gekennzeichnet, dass** der zweite Rechtszweig (72B; 172B; 472B) und der erste Linkszweig (71A; 171A; 471A) im Wesentlichen denselben maximalen Durchlassquerschnitt haben, welcher größer als die maximalen Durchlassquerschnitte des ersten Rechtszweigs (72A; 172A; 472A) und des zweiten Linkszweigs (71B; 171B; 471B) ist.

3. Vorrichtung nach Anspruch 1 oder 2, **dadurch gekennzeichnet, dass** sie Mittel (82; 182; 294, 296; 409) zum Steuern der Konfiguration des Wahlventils (70; 170; 270; 370; 470) umfasst, welche die Winkelstellung der lenkenden Mittel für die Fortbewegung berücksichtigen (80; 180).

4. Vorrichtung nach einem der Ansprüche 1 bis 3, **dadurch gekennzeichnet, dass** das Wahlventil (70; 170; 270; 370; 470) ein fortschreitendes Ventil ist.

5. Vorrichtung nach Anspruch 4, **dadurch gekennzeichnet, dass** das Wahlventil (70; 170; 270; 370; 470) einen Schieber (280; 380) enthält, der drei stabile Stellungen einzunehmen vermag, welche die erste, zweite bzw. dritte Konfiguration des Ventils vorgeben, und dass die Gesetze, wie die Durchlassquerschnitte in den Rechts- und Linkszweigen des Wahlventils während der Verschiebung dieses Schiebers zwischen seinen verschiedenen Stellungen variieren, in Abhängigkeit von der Lenkkennlinie der Maschine bestimmt werden.

6. Vorrichtung nach den Ansprüchen 3, 4 und 5, **dadurch gekennzeichnet, dass** die Änderungen der Durchlassquerschnitte in Abhängigkeit von der Winkelstellung (80; 180) der lenkenden Mittel für die Fortbewegung proportional zu den von der Winkelstellung der lenkenden Mittel für die Fortbewegung abhängigen Änderungen der Fluidausstöße ($q_1$, $q_2$) sind, welche in den Recht- und Linkszweigen (71A, 71B, 72A, 72B; 171A, 171B, 172A, 172B; 471A, 471B, 472A, 472B) des Wahlventils (70; 170; 270; 370; 470) erforderlich sind, um eine Bewegung der Mittel für die Fortbewegung im Wesentlichen ohne Schlupf der letzteren bezogen auf den Boden zu bewirken.

7. Vorrichtung nach einem der Ansprüche 1 bis 6, **dadurch gekennzeichnet, dass** jede der beiden Gruppen aus Mitteln für die Fortbewegung (1, 2, 3, 4) zwei Mittel für die Fortbewegung umfasst, die an jeder Seite der Maschine angeordnet sind, wobei die zweite Motorengruppe einen ersten und einen zweiten Motor (10, 20) umfasst, an denen jeweils zwei Mittel für die Fortbewegung (1, 2) befestigt sind, welche die lenkenden Mittel für die Fortbewegung sind, und dass die erste Reihenleitung (12), den zweiten Elementarmotor (32) eines (30) der Motoren der ersten Motorengruppe mit dem ersten Motor (10) der zweiten Gruppe verbindet, während die zweite Reihenleitung (22) den zweiten Elementarmotor (42) des anderen Motors (40) der ersten Motorengruppe mit dem zweiten Motor (20) der zweiten Gruppe verbindet.

8. Vorrichtung nach einem der Ansprüche 1 bis 7, bei der die Reihenleitungen (12, 22) bei Vorwärtsfahrt der Maschine Leitungen zum Speisen der zweiten Elementarmotoren (32, 42) der Doppelmotoren (30, 40) der ersten Motorengruppe mit Fluid sind, wobei die Doppelmotoren hintere Mittel für die Fortbewegung in Bewegung versetzen, **dadurch gekennzeichnet, dass** die Durchlassquerschnitte in den Rechtszweigen (72A, 72B; 472A, 472B) und den Linkszweigen (71A, 71B; 471A, 471B) des Wahlventils (70; 270; 370; 470) derart ausgelegt sind, dass bei einer Rechts- oder Linkskurve der Durchlassquerschnitt im Rechts- oder Linkszweig (72A, 71B; 472A, 471B), mit dem die Reihenleitung (12, 22) verbunden ist, welche mit dem zweiten Elementarmotor (32, 42) desjenigen der Motoren (30, 40) der ersten Gruppe in Verbindung steht, welcher das in der Kurve außen befindliche Mittel für die Fortbewegung in Bewegung setzt, größer als der Durchlassquerschnitt im anderen Rechtszweig oder Linkszweig (72B, 71A; 472B, 471A) ist.

9. Vorrichtung nach einem der Ansprüche 1 bis 6, **dadurch gekennzeichnet, dass** die zweite Motorengruppe einen Doppelmotor (110) mit zwei aktiven Hubräumen, die einem ersten bzw. einem zweiten Elementarmotor (111, 113) entsprechen, und ein einziges Mittel für die Fortbewegung (3') umfasst, welches lenkend ist, und welches an diesem Doppelmotor befestigt ist, und dass die erste Reihenleitung (112) den zweiten Elementarmotor (132) eines (130) der Motoren der ersten Motorengruppe mit dem ersten Elementarmotor (111) des Doppelmotors (110) der zweiten Gruppe verbindet, während die zweite Reihenleitung (122) den zweiten Elementarmotor (142) des anderen Motors (140) der ersten Motorengruppe mit dem zweiten Elementarmotor (113) des Doppelmotors (110) der zweiten Gruppe verbindet.

10. Vorrichtung nach einem der Ansprüche 1 bis 7 oder Anspruch 9, bei der die Reihenleitungen (112, 122) bei Vorwärtsfahrt der Maschine Leitungen zum Speisen der zweiten Elementarmotoren (132, 142) der Doppelmotoren (130, 140) der ersten Motorengruppe mit Fluid sind, wobei die besagten Doppelmotoren vordere Mittel für die Fortbewegung (1', 2') in Bewegung bringen, **dadurch gekennzeichnet, dass** die Durchlassquerschnitte in den Rechtszweigen (172A, 172B) und den Linkszweigen (171A, 171B) des Wahlventils (170; 270; 370) derart ausgelegt sind, dass bei einer Rechts- oder Linkskurve der Durchlassquerschnitt des Rechtszweigs oder Linkszweigs (172A, 171B), mit dem die Reihenleitung (112, 122) verbunden ist, welche mit dem zweiten Elementarmotor desjenigen der Motoren (130, 140) der ersten Gruppe in Verbindung steht, welcher das in der Kurve außen befindliche Mittel für die Fortbewegung in Bewegung versetzt, kleiner als der Durchlassquerschnitt im anderen Rechtszweig oder Linkszweig (172B, 171A) ist.

11. Vorrichtung nach einem der Ansprüche 1 bis 10, **dadurch gekennzeichnet, dass** die Steuermittel des Wahlventils (270) zwei Elektromagnete (294, 296) umfassen, die in Abhängigkeit von der Auslenkung (80, 180) der lenkenden Mittel für die Fortbewegung gespeist werden können, um den Übergang des Ventils (270) aus seiner Konfiguration für eine Geradeausfahrt in die Konfiguration für eine Linkskurve bzw. in die Konfiguration für eine Rechtskurve zu steuern, und dass sie Mittel zum Steuern des Erregens und Abschaltens dieser Elektromagnete umfasst.

12. Vorrichtung nach Anspruch 11, **dadurch gekennzeichnet, dass** sie Mittel umfasst, um die Speisung der Elektromagnete fortschreitend zu ändern.

13. Vorrichtung nach einem der Ansprüche 1 bis 10, **dadurch gekennzeichnet, dass** die Mittel zum Steuern des Wahlventils (370) ein Nockensystem (405, 406) umfassen, dessen Profil drei verschiedene Teile umfasst, die das Wahlventil in seine Konfiguration für Geradeausfahrt, in seine Konfiguration für eine Linkskurve bzw. seine Konfiguration für eine Rechtskurve steuern können.

14. Vorrichtung nach einem der Ansprüche 1 bis 13, **dadurch gekennzeichnet, dass** das Wahlventil (370; 470) ferner eine Konfiguration für Parallelspeisung einnehmen kann, in der der erste, zweite und dritte Anschluss (370A, 370B, 370C; 470A, 470B, 470C) untereinander uneingeschränkt verbunden sind (373A, 373B; 473A, 473B), und dass sie Mittel zum Steuern der Parallelspeisung umfasst, welche aktiviert werden können, um den Übergang des Wahlventils (370; 374) in seine Konfiguration für Parallelspeisung zu steuern, und deaktiviert werden können, um den Übergang des Wahlventils in eine andere seiner Konfigurationen zu ermöglichen.

15. Vorrichtung nach Anspruch 14, **dadurch gekennzeichnet, dass** das Wahlventil (370, 470) einen Wahlschieber (380) umfasst, und dass die Mittel zum Steuern der Parallelspeisung eine Kammer für die hydraulische Regelung (400) umfassen, welche mit unter Druck stehendem Fluid gespeist werden kann, um den Wahlschieber (380) in eine Stellung zu verschieben, welche die Konfiguration für die Parallelspeisung vorgibt, und zwar gegen Rückstellmittel (390) für diesen Wahlschieber.

**Claims**

1. Hydrostatic transmission apparatus for a vehicle having a front group of displacement members (1, 2; 1', 2'), and a rear group of displacement members (3, 4; 3'), the displacement member(s) (1, 2; 3') of one of said groups being steerable members, the apparatus comprising a transmission circuit which includes a pump (50; 150), and hydraulic motors in a front group of motors (10, 20; 130, 140) and in a rear group of motors (30, 40; 110), for the displacement members in the front and rear groups, a first one of the front and rear groups of motors comprising at least two motors (30, 40; 130, 140) to which two displacement members (3, 4; 1', 2') situated on either side of the vehicle are respectively coupled, while the second group of motors comprises at least one motor (10, 20; 110) to which at least one displacement member (1, 2; 3') is coupled, the two motors (30, 40; 130, 140) of the first group of motors being dual-capacity motors each having two distinct operating cylinder capacities which correspond respectively to a first elementary motor (31, 41; 131, 141) and to a second elementary motor (32, 42; 132, 142), the first elementary motor (31, 41; 131, 141) of each of the dual-capacity motors (30, 40; 130, 140) being connected to the pump (50; 150) in parallel (51, 52; 151, 152) with a motor (10, 20; 110) of the second group of motors, while the second elementary motor (32, 42; 132, 142) is connected in series with said motor (10, 20; 120) of the second group, first and second series pipes (12, 22; 112, 122) thus existing between the second elementary motors of each of the two dual-capacity motors and the second group of motors;

said apparatus being **characterised in that** it comprises a selection valve (70; 170; 270; 370; 470) connected to the first series pipe (12; 112) via a first connection (70A; 170A; 270A; 370A; 470A), to the second series pipe (22; 122) via a second connection (70B; 170B; 270B; 370B; 470B), and to a port (50B; 150B) of the pump (50; 150) via a third connection (70C; 170C; 270C; 370C; 470C), **in that** said valve is suitable for taking up a "straight-ahead" configuration in which all three of the above-mentioned connections are isolated from one another, a "left-turn" configuration in which the first and third connections are interconnected via a "first left branch" path (71A; 171A; 471A), while the second and third connections are interconnected via a "second left branch" path (71B; 171B; 471B), and a "right-turn" configuration in which the first and third connections are interconnected via a "first right branch" path (72A; 172A; 472A), while the second and third connections are interconnected via a "second right branch" path (72B; 172B; 472B), and **in that** the flow sections of at least some of said right and left branches are different.

2. Apparatus according to claim 1, **characterised in that** the second right branch (72B; 172B; 472B) and the first left branch (71A; 171A; 471A) have substantially the same maximum flow section which is larger than the maximum flow sections of the first right branch (72A; 172A; 472A) and of the second left branch (71B; 171B; 471B).

3. Apparatus according to claim 1 or 2, **characterised in that** it comprises control means (82; 182; 294; 296; 409) for controlling the configuration of the selection valve (70; 170; 270; 370; 470), which means take into account (80; 180) the angular positions of the steerable displacement members.

4. Apparatus according to any one of claims 1 to 3, **characterised in that** the selection valve (70; 170; 270; 370; 470) is a progressive valve.

5. Apparatus according to claim 4, **characterised in that** the selection valve (70; 170; 270; 370; 470) includes a slide (280; 380) that is suitable for taking up three stable positions respectively defining the first, second, and third configurations of said valve, and **in that** the relationships governing the variation in the flow sections of the right and left branches of the selection valve while the slide is moving between its various positions are determined as a function of the steering diagram of the vehicle.

6. Apparatus according to claims 3, 4, and 5, **characterised in that** said variations in the flow sections as a function of the angular positions (80; 180) of the steerable displacement members are proportional to the variations, as a function of the angular positions of the steerable displacement members, in the flow rates of the fluid ($q_1$, $q_2$) which are necessary in the right and left branches (71A, 71B, 72A, 72B; 171A, 171B, 172A, 172B; 471A, 471B, 472A, 472B) of the selection valve (70; 170; 270; 370; 470) so as to cause the displacement members to be displaced substantially without them slipping relative to the ground.

7. Apparatus according to any one of claims 1 to 6, said apparatus being **characterised in that** each of the two groups of displacement members (1, 2, 3, 4) comprises two displacement members situated on either side of the vehicle, the second group of motors comprising first and second motors (10, 20) which are coupled to respective displacement members (1, 2) which are the steerable displacement members, and **in that** the first series pipe (12) connects the second elementary motor (32) of one of the motors (30) of the first group of motors to the first motor (10) of the second group, while the second series pipe (22) connects the second elementary motor (42) of the other motor (40) of the first group of motors to the second motor (20) of the second group.

8. Apparatus according to any one of claims 1 to 7, in which, when the vehicle is in forward drive, the series pipes (12, 22) are pipes for feeding fluid to the second elementary motors (32, 42) of the dual-capacity motors (30, 40) of the first group of motors, said dual-capacity motors driving the rear displacement members, said apparatus being **characterised in that** the flow sections in the right branches (72A, 72B; 472A, 472B) and in the left branches (71A, 71B; 471A, 471B) of the selection valve (70; 270; 370; 470) are determined such that, during a right or a left turn, the flow section in the right or left branch (72A, 71B; 472A, 471B) that is connected to the series pipe (12, 22) connected to the second elementary motor (32, 42) of that one of the motors (30, 40) of the first group which drives the displacement member on the outside of the turn is larger than the flow section in the other right or left branch (72B, 71A; 472B, 471A).

9. Apparatus according to any one of claims 1 to 6, **characterised in that** the second group of motors comprises a dual-capacity motor (110) having two distinct operating cylinder capacities which correspond respectively to first and second elementary motors (111, 113), a steerable single displacement member (3') being coupled to the dual-capacity motor, and **in that** the first series pipe (112) connects the second elementary motor (132) of one of the motors (130) of the first group of motors to the first elementary motor (111) of the dual-capacity motor (110) of the second group, while the second series pipe (122) connects the second elementary motor (142) of the other motor (140) of the first group of motors to the second elementary motor (113) of said dual-capacity motor (110) of the second group.

10. Apparatus according to any one of claims 1 to 7, or claim 9, in which, when the vehicle is in forward drive, the series pipes (112, 122) are pipes for feeding fluid to the second elementary motors (132, 142) of the dual-capacity motors (130, 140) of the first group of motors, said dual-capacity motors driving the front displacement members (1', 2'), said apparatus being **characterised in that** the flow sections of the right branches (172A, 172B) and of the left branches (171A, 171B) of the selection valve (170; 270; 370) are determined such that, during a right or a left tum, the flow section in the right or left branch (172A, 171B) that is coupled to the series pipe (112, 122) connected to the second elementary motor of that one of the motors (130, 140) of the first group which drives the displacement member on the outside of the turn is smaller than the flow section in the other right or left branch (172B, 171A).

11. Apparatus according to any one of claims 1 to 10, **characterised in that** the control means for controlling the selection valve (270) comprise two electromagnets (294, 296) suitable for being powered as a function of the directions (80, 180) of the steerable displacement members so as to cause said valve (270) to go from its straight-ahead configuration respectively to its left-turn configuration and to its right-turn configuration, and **in that** it further comprises means for switching the electromagnets on and off.

12. Apparatus according to claim 11, **characterised in that** it further comprises means for varying the powering of the electromagnets progressively.

13. Apparatus according to any one of claims 1 to 10, **characterised in that** the control means of the selection valve (370) comprise a cam system (405, 406) whose cam profile is made up of three distinct portions suitable for causing the selection valve to go respectively to its straight-ahead configuration, to its left-turn configuration, and to its right-turn configuration.

14. Apparatus according to any one of claims 1 to 13, **characterised in that** the selection valve (370; 470) is suitable for further taking up a parallel-feed configuration in which the first, second, and third connections (370A, 370B, 370C; 470A, 470B, 470C) are interconnected without constrictions (373A, 3738; 473A, 473B), and **in that** it further comprises parallel feed control means suitable for being activated to cause the selection valve (370; 470) to go to its parallel feed configuration, and for being deactivated to allow the selection valve to go to another one of its configurations.

15. Apparatus according to claim 14, **characterised in that** the selection valve (370, 470) includes a selection slide (380), and **in that** the parallel feed control means comprise a hydraulic control chamber (400) suitable for being fed with fluid under pressure so as to displace the selection slide (380) into a position defining the parallel feed configuration against the return means (390) for returning the selection slide.

FIG.1

$q_1/Q_1$   $q_2/Q_1$

$q_2/Q_1$   $q_1/Q_1$

FIG.2

0   $\alpha$

$q_1/Q_1$   $q_2/Q_1$

$q_2/Q_1$   $q_1/Q_1$

FIG.5

0   $\alpha$

$\sigma$

$\sigma_1$   $\sigma_2$

$\sigma_2$   $\sigma_1$

0   $\alpha$

FIG.10

$\sigma$

$\sigma_1$   $\sigma_2$

$\sigma_2$   $\sigma_1$

0   $\alpha$

FIG.11

FIG.3

FIG.4

FIG.6

FIG.7A

FIG.7B

FIG.7C

EP 1 010 566 B1

FIG.8

FIG.9

22